# EUROPÄISCHE PATENTSCHRIFT

(11) **EP 3 142 898 B1**
(45) Veröffentlichungstag und Bekanntmachung des Hinweises auf die Patenterteilung: **08.01.2020**
(21) Anmeldenummer: 15713460.2
(22) Anmeldetag: 27.03.2015
(51) Int. Cl.: B60Q 1/50, B60Q 1/32

(54) **ELEKTRONISCHE BAUGRUPPE ZUM BELEUCHTEN EINES EINEN DETEKTIONSBEREICH EINES SENSORS MARKIERENDEN ZIELBEREICHES**
ELECTRONIC ASSEMBLY FOR ILLUMINATING A TARGET AREA MARKING A DETECTION AREA OF A SENSOR
SOUS-ENSEMBLE ÉLECTRONIQUE SERVANT À ÉCLAIRER UNE ZONE CIBLE MARQUANT UNE ZONE DE DÉTECTION D'UN CAPTEUR

(30) Priorität: 16.05.2014 DE 102014106939
(43) Veröffentlichungstag der Anmeldung: 22.03.2017
(73) Patentinhaber: Huf Hülsbeck & Fürst GmbH & Co. KG, 42551 Velbert (DE)
(72) Erfinder: YOMKIL, Malabo, 45139 Essen (DE); ETTE, Bernd, 38442 Wolfsburg (DE); MÖNIG, Stefan, 58332 Schwelm (DE); SCHUMACHER, Helmut, 48653 Coesfeld (DE); STICHERLING, Nadine, 45257 Essen (DE); LINDIC, Iko, 45149 Essen (DE); HELLER, Norbert, 47929 Grefrath (DE); ZIEGLER, Alexander, 42489 Wülfrath (DE); HACHE, Christof, 42551 Velbert (DE); MÜLLER, Oliver, 42551 Velbert (DE); SCHINDLER, Mirko, 42549 Velbert (DE)
(74) Vertreter: Zenz Patentanwälte Partnerschaft mbB
(86) Internationale Anmeldenummer: PCT/EP2015/056761
(87) Internationale Veröffentlichungsnummer: WO 2015/172934

(56) Entgegenhaltungen:
- WO-A1-2014/048762
- JP-A- 2007 245 939
- US-A1- 2013 130 674
- US-B1- 6 260 988

## Beschreibung

Die vorliegende Erfindung betrifft eine elektronische Baugruppe für ein Kraftfahrzeug, und insbesondere eine elektronische Baugruppe zum Beleuchten eines einen Detektionsbereich eines Sensors markierenden Zielbereiches.

Zur berührungslosen Betätigung einer Tür oder Klappe an einem Kraftfahrzeug ist es üblich, dass ein Benutzer bei definierten Bereichen des Kraftfahrzeuges gewisse Gesten ausführt, um ein Betätigen der Tür oder Klappe zu initiieren. So ist es zum Öffnen der Heckklappe eines Kraftfahrzeuges üblich, dass ein Benutzer den Fuß beispielsweise in den Bereich unter der hinteren Stoßstange führt und dort gegebenenfalls noch eine seitliche Bewegung ausführt.

Um den Detektionsbereich eines das Vorhandensein des Fußes des Bedieners erfassenden Sensors für den Bediener zu kennzeichnen, ist es bekannt, diesen Bereich über ein Beleuchtungsmittel auf dem Untergrund zu markieren, wozu gemäß dem Stand der Technik weißes Licht verwendet wird.

Beispielsweise beschreibt die WO 2014/048762 A1 eine elektronische Sensoreinheit mit einer Beleuchtungseinrichtung, mit welcher ein einen Detektionsbereich eines Sensors kennzeichnender Zielbereich auf einen Untergrund projiziert werden kann, wozu weißes Licht verwendet wird.

Insbesondere bei einem unebenen Untergrund, beispielsweise wenn das Kraftfahrzeug auf einer Rasenfläche abgestellt ist, ist ein mit weißem Licht markierter Zielbereich für einen Bediener jedoch nur ausgesprochen schlecht zu erkennen.

Aus der JP 2007 245939 A ist es bekannt, zur Verbesserung der Erkennbarkeit eines Zielbereichs rotes und blaues Licht zur Markierung dieses Zielbereichs zu verwenden. Die Verwendung des roten und blauen Lichts ist aber unabhängig von dem Untergrund, so dass die Verbesserung der Erkennbarkeit des Zielbereichs stark von den Gegebenheiten dieses Untergrunds abhängig ist.

Es ist daher Aufgabe der vorliegenden Erfindung, eine elektronische Baugruppe bereitzustellen, welche eine von einem Benutzer gut wahrnehmbare Kennzeichnung eines Zielbereiches ermöglicht, und zwar in Anpassung einen Untergrund.

Die Aufgabe wird erfindungsgemäß gelöst durch eine elektronische Baugruppe nach Anspruch 1. Die erfindungsgemäße elektronische Baugruppe umfasst ein Gehäuse, in welchem eine Steuer- und Auswerteeinrichtung, die mit einer Steuereinrichtung des Kraftfahrzeuges koppelbar ist, angeordnet ist. Die elektronische Baugruppe umfasst ferner eine mit der Steuer- und Auswerteeinrichtung gekoppelte und von dieser ansteuerbare Beleuchtungseinrichtung, mit welcher ein einen Detektionsbereich kennzeichnender Zielbereich außerhalb des Gehäuses durch ein optisches Signal auf einem Untergrund markierbar ist, wobei die Beleuchtungseinrichtung erfindungsgemäß von der Steuer- und Auswerteeinrichtung zum Ausstrahlen von Licht mit unterschiedlichen Farben ansteuerbar ist, die Baugruppe einen mit der Steuer- und Auswerteeinrichtung gekoppelten Sensor zur Erfassung des Zielbereichs (Y) und zur Ermittlung der Beschaffenheit des Untergrundes des Zielbereichs (Y) aufweist, und, in Abhängigkeit von der Beschaffenheit des Untergrundes, die Beleuchtungseinrichtung von der Steuer- und Auswerteeinrichtung zum Ausstrahlen von Licht mit unterschiedlichen Farben angesteuert wird.

Es hat sich gezeigt, dass insbesondere bei unebenem Untergrund und bei Verwendung von weißem Licht zur Markierung/Kennzeichnung des Zielbereichs dieser für einen Benutzer nur sehr schwer wahrnehmbar ist. Ist die Beleuchtungseinrichtung erfindungsgemäß zum Ausstrahlen von Licht mit unterschiedlichen Farben ansteuerbar und wird über die Steuer- und Auswerteeinrichtung die Beleuchtungseinrichtung derart angesteuert, dass ein kontinuierlicher Farbwechsel (beispielsweise zwischen grün und rot) stattfindet, kann der Zielbereich auch bei unebenem Untergrund von einem Benutzer leicht erkannt werden, so dass das berührungslose Betätigen beispielsweise der Heckklappe problemlos möglich ist.

Die Beschaffenheit des Untergrundes, auf welchen der Zielbereich projiziert werden soll, ist entscheidender Bedeutung dafür, wie gut ein Benutzer diesen Zielbereich wahrnehmen kann. Erfindungsgemäßen ist es daher weiter vorgesehen, dass die elektronischen Baugruppe einen mit der Steuer- und Auswerteeinrichtung gekoppelten Sensor umfasst, mit welchem der Untergrund bei dem Zielbereich erfasst werden kann. Insbesondere kann ermittelt werden, wie der Untergrund im Hinblick auf vorhandene Höhenunterschiede aufgebaut ist, so dass eine an den Untergrund angepasste Ansteuerung der Beleuchtungseinrichtung erfolgen kann.

Bei einer bevorzugten Ausführungsform der erfindungsgemäßen elektronischen Baugruppe ist die Beleuchtungseinrichtung zum Ausstrahlen von zumindest rotem und grünem Licht ansteuerbar. Es hat sich gezeigt, dass ein Farbwechsel bei einer entsprechenden Farbkombination von einem Benutzer besonders gut wahrnehmbar ist.

Damit die Beleuchtungseinrichtung Licht mit unterschiedlichen Farben ausstrahlen kann, muss beispielsweise ein entsprechendes Leuchtmittel, dass mehrere Farben ausstrahlen kann, in der Beleuchtungseinrichtung angeordnet sein. Dieses Leuchtmittel ist dann über die Steuer- und Auswerteschaltung so anzusteuern, dass der gewünschte Wechsel zwischen beispielsweise rotem und grünem Licht erreicht wird. Entsprechende Leuchtmittel haben jedoch eine relativ geringe Strahlungsintensität, so dass es bei einer bevorzugten Ausführungsform vorgesehen ist, dass die Beleuchtungseinrichtung zumindest zwei Leuchtmittel aufweist, wobei sich die von den Leuchtmitteln ausgestrahlten Wellenlängenbereiche unterscheiden. Zum Kennzeichnen des Zielbereiches werden dann die Leuchtmittel mit unterschiedlichem Wellenlängenbereich von der Steuer- und Auswerteeinrichtung abwechselnd an- und ausgeschaltet, wobei die Frequenz der Farbwechsel und die Dauer der jeweiligen Leuchtphasen von der Steuer- und Auswerteeinrichtung steuerbar sind.

Bei einer besonders kostengünstigen und stromsparenden Variante ist es vorgesehen, dass die erfindungsgemäße elektronische Baugruppe zumindest zwei LED-Leuchtmittel aufweist, wobei sich die von den LED-Leuchtmitteln ausgestrahlten Wellenlängenbereiche voneinander unterscheiden.

Wie bereits angedeutet, ist die Beschaffenheit des Untergrundes, auf welchen der Zielbereich projiziert werden soll, von entscheidender Bedeutung dafür, wie gut ein Benutzer diesen Zielbereich wahrnehmen kann. Bei einer bevorzugten Ausführungsform der erfindungsgemäßen elektronischen Baugruppe umfasst diese einen mit der Steuer- und Auswerteeinrichtung gekoppelten Sensor, mit welchem der Untergrund bei dem Zielbereich erfasst werden kann. Insbesondere kann ermittelt werden, wie der Untergrund im Hinblick auf vorhandene Höhenunterschiede aufgebaut ist, so dass eine an den Untergrund angepasste Ansteuerung der Beleuchtungseinrichtung erfolgen kann.

Ferner kann die erfindungsgemäße elektronische Baugruppe einen (weiteren) Sensor aufweisen, mit welchem die Helligkeit im Detektions- bzw. Zielbereich erfasst werden kann, so dass die Beleuchtungseinrichtung in Abhängigkeit von der Helligkeit optimal angesteuert werden kann. Bei einer entsprechenden Ausführungsform kann die Ansteuerung der Beleuchtungseinrichtung zum Ausstrahlen unterschiedlicher Farben also an die Helligkeitsgegebenheiten angepasst werden, so dass stets eine optimale Markierung des Zielbereiches möglich ist.

Die beiden zuvor genannten Sensoren können durch einen kombinierten Sensor realisiert werden, sofern beide Varianten verwendet werden sollen.

In Abhängigkeit von der Positionierung der elektronischen Baugruppe innerhalb bzw. an dem Kraftfahrzeug unterliegt diese einer mehr oder weniger starken regelmäßigen Verschmutzung, wodurch die Markierung des Zielbereichs auf einen Untergrund behindert wird, da sich Schmutz auf der Beleuchtungseinrichtung absetzen kann.

Bei einer bevorzugten Ausführungsform der erfindungsgemäßen elektronischen Baugruppe ist es daher vorgesehen, dass der Beleuchtungseinrichtung eine selbstreinigende Beschichtung zugeordnet ist, und zwar in dem Bereich der Beleuchtungseinrichtung, durch welche das Licht des bzw. der Leuchtmittel aus der Beleuchtungseinrichtung austritt (also im Bereich der freien Apertur). Bei einer selbstreinigenden Beschichtung ist das Oberflächenverhalten gegenüber einer normalen "Beschichtung" so verändert, dass sich Schmutz nur schwer auf der Beschichtung festsetzen kann und bei Kontakt mit Wasser weitgehend von diesem abgewaschen wird.

Alternativ oder zusätzlich ist es bei einer anderen bevorzugten Ausführungsform vorgesehen, dass die elektronische Baugruppe eine (mit der Steuer- und Auswerteeinrichtung gekoppelte) Düsenanordnung umfasst, über welche die Beleuchtungseinrichtung, oder die selbstreinigende Beschichtung, mit einem Reinigungsfluid beaufschlagt werden kann. Dabei kann es sich um mit einer Reinigungslösung versehenes Wasser handeln. Die Düsenanordnung kann in Abhängigkeit von der Zahl der gefahrenen Kilometer aktiviert werden, alternativ wäre es vorstellbar, dass die Düsenanordnung gleichzeitig mit der Betätigung der Wascheinrichtung für die Heckscheibe oder bei einem Ausstieg des Benutzers aktiviert wird.

Die Erfindung wird nachfolgend anhand bevorzugter Ausführungsformen erläutert, welche in der beiliegenden Zeichnung dargestellt sind, wobei
Figur 1 eine Seitenschnittansicht einer ersten Ausführungsform der erfindungsgemäßen elektronischen Baugruppe zeigt, und
Figuren 2 und 3 Schrägansichten einer zweiten Ausführungsform zeigen, wobei bei beiden Figuren das Gehäuse und bei Figur 3 das Gehäuse und ein Teil der Beleuchtungseinrichtung fortgelassen ist.

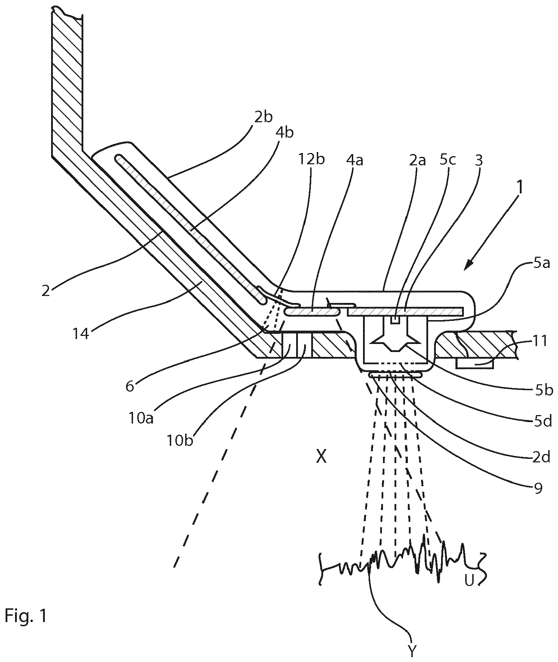

Figur 1 zeigt eine seitliche Schnittansicht einer ersten Ausführungsform der elektronischen Baugruppe 1, wobei die elektronische Baugruppe an einem Karosseriebauteil 14 eines Kraftfahrzeuges befestigt ist. Die elektronische Baugruppe umfasst bei der gezeigten Ausführungsform ein Gehäuse 2 mit zwei Gehäuseabschnitten 2a und 2b, die über einen Gelenkbereich 6 miteinander verbunden sind.

In den beiden Gehäuseabschnitten 2a, 2b der erfindungsgemäßen elektronischen Baugruppe gemäß der ersten Ausführungsform sind verschiedene weitere Bauelemente angeordnet. In dem Gehäuseabschnitt 2a ist eine Steuer- und Auswerteeinrichtung 3 sowie eine mit der Steuer- und Auswerteeinrichtung gekoppelte Beleuchtungseinrichtung 5a angeordnet. Die Beleuchtungseinrichtung 5a umfasst bei dieser Ausführungsform ein Leuchtmittel 5c. Die Beleuchtungseinrichtung 5a umfasst ferner eine transparente Durchtrittsöffnung 5b, durch welche von dem Leuchtmittel 5c abgestrahltes Licht treten kann. Über das Leuchtmittel 5c wird ein Zielbereich Y auf einem Untergrund U markiert. Der Beleuchtungseinrichtung 5a ist eine Linsenanordnung 5b zugeordnet, die in der Beleuchtungseinrichtung 5a selbst angeordnet ist. Die Linsenanordnung 5b ist in Abhängigkeit von dem Abstand zwischen dem Leuchtmittel 5c und dem Untergrund U ausgewählt, so dass stets für eine optimale Fokussierung des Lichts auf den Untergrund gesorgt ist. Der Beleuchtungseinrichtung ist ferner eine selbstreinigende Beschichtung 9 zugeordnet.

In dem Gehäuseabschnitt 2a ist ferner ein erster kapazitiver Sensor 4a angeordnet, welcher einen Detektionsbereich X überwacht. Der erste kapazitive Sensor und die Beleuchtungseinrichtung sind derart aufeinander abgestimmt angeordnet, dass sich der mit der Beleuchtungseinrichtung 5a auf den Untergrund projizierte Zielbereich Y zumindest teilweise mit dem Detektionsbereich X des ersten kapazitiven Sensors deckt. Der auf den Untergrund projizierte Zielbereich zeigt damit einem Benutzer effektiv an, bei welchem Bereich unterhalb des Kraftfahrzeuges eine Betätigung initiiert werden kann.

Erfindungsgemäß ist die Beleuchtungseinrichtung so ausgebildet, dass diese von der Steuer- und Auswerteschaltung zum Abstrahlen von Licht unterschiedlicher Farben angesteuert werden kann. Dazu umfasst die Beleuchtungseinrichtung beispielsweise zwei Lichtquellen, die entweder Licht unterschiedlicher Wellenlänge bzw. Wellenlängenbereiche ausstrahlen, oder denen jeweils ein entsprechender Filter zugeordnet ist. Damit der Zielbereich von dem Benutzer gut zu erkennen ist, wird das Leuchtmittel 5c von der Steuer- und Auswerteschaltung derart angesteuert, dass ein wiederholter rascher Übergang zwischen den unterschiedlichen Farben stattfindet, beispielsweise mit einer Frequenz von 30 Hz. Ein solches "Flackern" des Zielbereiches wird bei unebenem Untergrund von einem Benutzer deutlich besser wahrgenommen als lediglich ein mit weißem Licht markierter Zielbereich.

Bei der gezeigten Ausführungsform umfasst die Beleuchtungseinrichtung lediglich ein Leuchtmittel 5c, welches entsprechend angesteuert werden kann, d.h. in der Lage ist, Licht unterschiedlicher Farben abzustrahlen. Dazu umfasst das Leuchtmittel beispielsweise zwei Lichtquellen, die Licht unterschiedlicher Farbe abstrahlen.

Bei der gezeigten Ausführungsform umfasst die elektronische Baugruppe ferner einen ersten Sensor 10a, der mit der Steuerund Auswerteeinrichtung 3 gekoppelt ist und in einer Ausnehmung des Karosseriebauteils 14 angeordnet ist. Mit dem Sensor kann die Beschaffenheit des Untergrundes U ermittelt werden, und in Abhängigkeit von dieser Beschaffenheit kann durch die Steuerund Auswerteeinrichtung eine optimale Ansteuerung der Beleuchtungseinrichtung erfolgen, so dass stets, und in Abhängigkeit von dem ermittelten Untergrund, eine optimale Markierung für den Benutzer gewährleistet ist.

Die elektronische Baugruppe umfasst ferner einen zweiten Sensor 10b, mit dem die Helligkeit des Bereichs unterhalb der Beleuchtungseinrichtung 5a ermittelt wird. In Abhängigkeit von der ermittelten Helligkeit kann dann mit Hilfe der Steuer- und Auswerteeinrichtung die optimale Markierung des Zielbereichs eingestellt werden (beispielsweise die Wechselfrequenz zwischen den Farben oder die Farben selber wenn mehr als zwei unterschiedliche Farben abgestrahlt werden können).

Bei dem ersten Gehäuseabschnitt 2a ist ferner eine Düsenanordnung 11 an dem Karosserieteil befestigt, mit welcher die Bereiche der Beleuchtungseinrichtung gereinigt werden können, durch welche Licht aus der Beleuchtungseinrichtung austritt.

Bei der gezeigten Ausführungsform umfasst die elektrische Baugruppe ferner einen zweiten Gehäuseabschnitt 2b, in welchem ein zweiter kapazitiver Sensor 4b angeordnet ist, mit welchem ein zweiter (nicht dargestellter) Detektionsbereich überwacht werden kann. Hinsichtlich der beiden Sensoren sei angemerkt, dass bei anderen Ausführungsformen diese auch fortgelassen sein können, sie sind selber kein wesentlicher Bestandteil der erfindungsgemäßen Baugruppe.

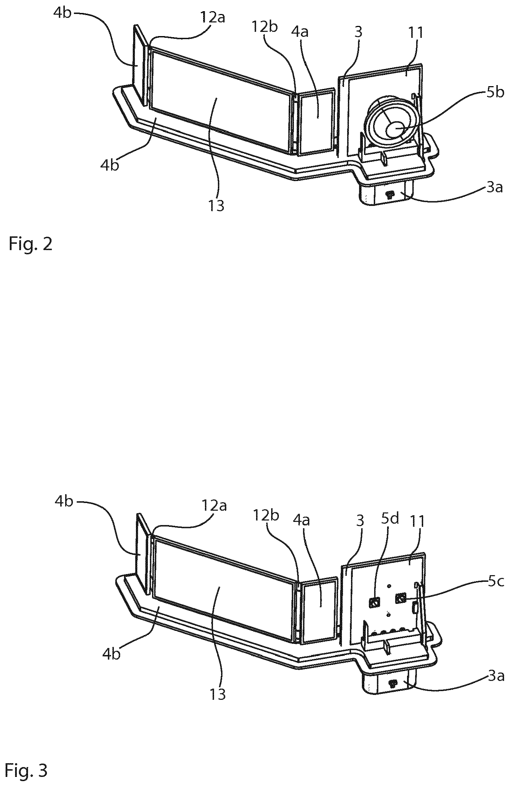

Die Figuren 2 und 3 zeigen Seitenansichten einer zweiten Ausführungsform der elektronischen Baugruppe, wobei der Übersichtlichkeit halber bei Figur 2 das Gehäuse und bei Figur 3 das Gehäuse und ein Teil der Beleuchtungseinrichtung fortgelassen ist.

Bei dem zweiten Ausführungsbeispiel sind zwei kapazitive Sensoren 4a und 4b über ein Distanzstück 13 voneinander beabstandet, wobei das Distanzstück über Kopplungselemente 12a, 12b mit dem ersten und dem zweiten kapazitiven Sensor gekoppelt ist und so eine Verbindung zwischen den beiden Sensoren und der Steuer- und Auswerteschaltung hergestellt ist.

Die Beleuchtungseinrichtung 5a gemäß dieser Ausführungsform unterscheidet sich derart von der ersten Ausführungsform, dass diese zwei Leuchtmittel 5c, 5d umfasst, wobei die beiden Leuchtmittel Licht unterschiedlicher Wellenlängenbereiche / einer anderen Farbe abstrahlen. Kann die Beleuchtungseinrichtung "nur" zwei Farben abstrahlen, sind diese bevorzugt rot und grün, da ein Wechsel zwischen diesen Farben für den Bediener besonders gut zu erkennen ist.

Bei alternativen Ausführungsformen kann die Beleuchtungseinrichtung eine Mehrzahl von Leuchtmitteln aufweisen, so dass komplexe Farbwechsel zum Kennzeichnen des Zielbereichs verwendet werden können. Eine solche "Lichtorgel" kann ggf. über die Kopplung der Steuer- und Auswerteeinrichtung mit einer fahrzeuginternen Steuereinrichtung individuell an den Bediener angepasst werden.

## Patentansprüche

1. Elektronische Baugruppe (1) für ein Kraftfahrzeug, mit einem Gehäuse (2)
einer in dem Gehäuse (2) angeordneten Steuer- und Auswerteeinrichtung (3), die mit einer Steuereinrichtung des Kraftfahrzeuges koppelbar ist,
einer mit der Steuer- und Auswerteeinrichtung (3) gekoppelten und von dieser ansteuerbaren Beleuchtungseinrichtung (5a), mit welcher ein einen Detektionsbereich (X) kennzeichnender Zielbereich (Y) außerhalb des Gehäuses durch ein optisches Signal auf einem Untergrund (U) markierbar ist,
**dadurch gekennzeichnet, dass**
die Beleuchtungseinrichtung (5a) von der Steuer- und Auswerteeinrichtung (3) zum Ausstrahlen von Licht mit unterschiedlichen Farben ansteuerbar ist,
die Baugruppe einen mit der Steuer- und Auswerteeinrichtung (3) gekoppelten Sensor (10a) zur Erfassung des Zielbereichs (Y) und zur Ermittlung der Beschaffenheit des Untergrundes (U) des Zielbereichs (Y) aufweist, und
in Abhängigkeit von der Beschaffenheit des Untergrundes (U) die Beleuchtungseinrichtung (5a) von der Steuer- und Auswerteeinrichtung (3) zum Ausstrahlen von Licht mit unterschiedlichen Farben angesteuert wird.

2. Elektronische Baugruppe (1) für ein Kraftfahrzeug nach Anspruch 1, **dadurch gekennzeichnet, dass** die Beleuchtungseinrichtung (5a) zum Ausstrahlen von zumindest rotem und grünem Licht ansteuerbar ist.

3. Elektronische Baugruppe (1) für ein Kraftfahrzeug nach Anspruch 1 oder 2, **dadurch gekennzeichnet, dass** die Beleuchtungseinrichtung (5a) zumindest zwei Leuchtmittel (5c, 5d) aufweist, wobei sich die von den Leuchtmitteln ausgestrahlten Wellenlängenbereiche unterscheiden.

4. Elektronische Baugruppe (1) für ein Kraftfahrzeug nach einem der Ansprüche 1 - 3, **dadurch gekennzeichnet, dass** die Beleuchtungseinrichtung (5a) zumindest zwei LED-Leuchtmittel (5c, 5d) aufweist, wobei sich die von den Leuchtmitteln ausgestrahlten Wellenlängenbereiche unterscheiden.

5. Elektronische Baugruppe (1) für ein Kraftfahrzeug nach einem der Ansprüche 1 - 4, **dadurch gekennzeichnet, dass** die Steuer- und Auswerteeinrichtung (3) derart gestaltet ist, dass die Beleuchtungseinrichtung derart angesteuert werden kann, dass ein Farbwechsel mit einer Frequenz von 30Hz erfolgt.

6. Elektronische Baugruppe (1) für ein Kraftfahrzeug nach einem der Ansprüche 1 - 5, **dadurch gekennzeichnet, dass** die Baugruppe einen mit der Steuer- und Auswerteeinrichtung (3) gekoppelten Sensor (10b) zum Messen der Helligkeit im Detektionsbereich aufweist.

7. Elektronische Baugruppe (1) für ein Kraftfahrzeug nach einem der Ansprüche 1 - 6, **dadurch gekennzeichnet, dass** der Beleuchtungseinrichtung (5a) eine selbstreinigende Beschichtung (9) zugeordnet ist.

8. Elektronische Baugruppe (1) für ein Kraftfahrzeug nach einem der Ansprüche 1 - 7, **dadurch gekennzeichnet, dass** die elektronische Baugruppe (1) eine Düsenanordnung (11) umfasst, über welche die Beleuchtungseinrichtung (5a) mit einem Reinigungsfluid beaufschlagt werden kann, wobei die Düsenanordnung mit der Steuer- und Auswerteeinrichtung (3) gekoppelt sein kann.

## Claims

1. An electronic assembly (1) for a motor vehicle, having a housing (2);
a control and evaluation device (3) arranged in the housing (2), which device can be coupled with a control device of the motor vehicle;
an illumination device (5a) which is coupled with the control and evaluation device (3) and which can be controlled by the same, which illumination device can be used to mark a target area (Y) identifying a detection area (X) outside of the housing by means of an optical signal on a surface (U);
**characterized in that**
the illumination device (5a) can be controlled by the control and evaluation device (3) to emit light in different colours;
that the assembly has a sensor (10a) coupled with the control and evaluation device (3) for capturing the target area (Y) and for determining the condition of the surface (U) of the target area (Y) ; and
that the illumination device (5a) is controlled by the control and evaluation device (3) to emit light in different colours in dependence on the condition of the surface (U).

2. The electronic assembly (1) for a motor vehicle according to Claim 1, **characterized in that** the illumination device (5a) can be controlled to emit at least red and green light.

3. The electronic assembly (1) for a motor vehicle according to Claim 1 or 2, **characterized in that** the illumination device (5a) has at least two lighting means (5c, 5d), wherein the respective wavelengths ranges emitted by these lighting means differ from each other.

4. The electronic assembly (1) for a motor vehicle according to any one of Claims 1 to 3, **characterized in that** the illumination device (5a) has at least two LED lighting means (5c, 5d), wherein the respective wavelengths ranges emitted by these lighting means differ from each other.

5. The electronic assembly (1) for a motor vehicle according to any one of Claims 1 to 4, **characterized in that** the control and evaluation device (3) is designed such that the illumination device can be controlled in such a manner that a change in colour is conducted at a frequency of 30Hz.

6. The electronic assembly (1) for a motor vehicle according to any one of Claims 1 to 5, **characterized in that** the assembly has a sensor (10b) for measuring the brightness in the detection area, which sensor is coupled with the control and evaluation device (3).

7. The electronic assembly (1) for a motor vehicle according to any one of Claims 1 to 6, **characterized in that** a self-cleaning coating (9) is associated with the illumination device (5a).

8. The electronic assembly (1) for a motor vehicle according to any one of Claims 1 to 7, **characterized in that** the electronic assembly (1) comprises a jet arrangement (11), via which a cleaning fluid can be applied to the illumination device (5a), wherein the jet arrangement can be coupled with the control and evaluation device (3).

## Revendications

1. Sous-ensemble électronique (1) pour un véhicule automobile, avec un boîtier (2),
un dispositif de commande et d'exploitation (3) disposé dans le boîtier (2), qui peut être couplé avec un dispositif de commande du véhicule automobile,
un dispositif d'éclairage (5a) couplé au dispositif de commande et d'exploitation (3) et pouvant être commandé par celui-ci, avec lequel une zone cible (Y) identifiant une zone de détection (X) peut être marquée sur un sol (U) en dehors du boîtier par un signal optique,
**caractérisé en ce que**
le dispositif d'éclairage (5a) peut être commandé par le dispositif de commande et d'exploitation (3) pour diffuser de la lumière avec des couleurs différentes,
le sous-ensemble comporte un capteur (10a) couplé avec le dispositif de commande et d'exploitation (3) pour saisir la zone cible (Y) et pour déterminer la nature du sol (U) de la zone cible (Y), et
le dispositif d'éclairage (5a) est commandé par le dispositif de commande et d'exploitation (3) pour diffuser de la lumière avec des couleurs différentes en fonction de la nature du sol (U).

2. Sous-ensemble électronique (1) pour un véhicule automobile selon la revendication 1, **caractérisé en ce que** le dispositif d'éclairage (5a) peut être commandé pour diffuser de la lumière au moins rouge et verte.

3. Sous-ensemble électronique (1) pour un véhicule automobile selon la revendication 1 ou 2, **caractérisé en ce que** le dispositif d'éclairage (5a) comporte au moins deux moyens d'éclairage (5c, 5d), sachant que les zones de longueur d'ondes irradiées par les moyens d'éclairage sont différentes.

4. Sous-ensemble électronique (1) pour un véhicule automobile selon l'une quelconque des revendications 1 - 3, **caractérisé en ce que** le dispositif d'éclairage (5a) comporte au moins deux moyens d'éclairage à DEL (5c, 5d), sachant que les zones de longueur d'ondes irradiées par les moyens d'éclairage sont différentes.

5. Sous-ensemble électronique (1) pour un véhicule automobile selon l'une quelconque des revendications 1 - 4, **caractérisé en ce que** le dispositif de commande et d'exploitation (3) est structuré de telle manière que le dispositif d'éclairage peut être commandé de telle sorte qu'un changement de couleur a lieu avec une fréquence de 30Hz.

6. Sous-ensemble électronique (1) pour un véhicule automobile selon l'une quelconque des revendications 1 - 5, **caractérisé en ce que** le sous-ensemble comporte un capteur (10b) couplé au dispositif de commande et d'exploitation (3) pour mesurer la luminosité dans la zone de détection.

7. Sous-ensemble électronique (1) pour un véhicule automobile selon l'une quelconque des revendications 1 - 6, **caractérisé en ce qu'**un revêtement autonettoyant (9) est attribué au dispositif d'éclairage (5a).

8. Sous-ensemble électronique (1) pour un véhicule automobile selon l'une quelconque des revendications 1 - 7, **caractérisé en ce que** le sous-ensemble électronique (1) comprend un système de buse (11) par le biais duquel le dispositif d'éclairage (5a) peut être sollicité avec un fluide de nettoyage, sachant que le système de buse peut être couplé avec le dispositif de commande et d'exploitation (3).
